# EUROPÄISCHE PATENTANMELDUNG

(11) **EP 4 256 936 A1**
(43) Veröffentlichungstag der Anmeldung: **11.10.2023**
(21) Anmeldenummer: 23166315.4
(22) Anmeldetag: 03.04.2023
(51) Int. Cl.: A01C 7/20, A01B 63/10, A01B 63/22

(54) **STEUERSYSTEM UND VERFAHREN ZUM VERÄNDERN DER LAGE VON AN EINER LANDWIRTSCHAFTLICHEN MASCHINE ANGEBRACHTEN ARBEITSAGGREGATEN SOWIE LANDWIRTSCHAFTLICHE MASCHINE**

(30) Priorität: 08.04.2022 DE 102022108555
(71) Anmelder: Horsch Maschinen GmbH, 92421 Schwandorf (DE)
(72) Erfinder: SCHULZE, Florian, 92421 Schwandorf (DE); PRÜLL, Thomas, 92421 Schwandorf (DE)
(74) Vertreter: v. Bezold & Partner Patentanwälte - PartG mbB

(57) **Zusammenfassung**

Die Erfindung betrifft ein Steuersystem zum Verändern der Lage von an einer landwirtschaftlichen Maschine (200) angebrachten Arbeitsaggregaten (20) zur Aussaat und/oder zur Bodenbearbeitung, wobei das Verändern der Lage ein Verschwenken der Arbeitsaggregate (20) zwischen einer Bodenkontaktposition und einer Nichtbodenkontaktposition sowie eine Lageregelung während der Bodenkontaktposition umfasst, und wobei das Verändern der Lage der Arbeitsaggregate (20) durch ein mittelbares und/oder unmittelbares Steuern und/oder Regeln der Lage der Arbeitsaggregate (20) mittels einer Stelleinrichtung (30) erfolgt, und wobei das Steuern und/oder Regeln der Stelleinrichtung (30) basierend auf von durch eine Steuereinrichtung (40) erzeugten Stellsignalen für die Stelleinrichtung (30) erfolgt. Zudem ist eine Erfassungseinrichtung (50) vorgesehen, die zur Vorgabe von Parameterwerten eingerichtet ist.

Die Steuereinrichtung (40) ist erfindungsgemäß eingerichtet, Stellsignale zum Verändern der Lage der Arbeitsaggregate (20) während der Bodenkontaktposition basierend auf Parametersätzen, welche Parametersätze jeweils durch zumindest einen Parameterwert definiert und/oder definierbar sind, zu erzeugen.

Die Erfindung betrifft zudem ein Verfahren zum Verändern der Lage von Arbeitsaggregaten zur Aussaat und/oder Bodenbearbeitung, sowie eine landwirtschaftliche Maschine.

## Beschreibung

Die Erfindung betrifft ein Steuersystem zum Verändern der Lage von an einer landwirtschaftlichen Maschine angebrachten Arbeitsaggregaten zur Aussaat und/oder zur Bodenbearbeitung. Die Erfindung betrifft zudem ein Verfahren zum Verändern der Lage von an einer landwirtschaftlichen Maschine angebrachten Arbeitsaggregaten zur Aussaat und/oder zur Bodenbearbeitung. Darüber hinaus betrifft die Erfindung eine landwirtschaftliche Maschine, insbesondere Sämaschine und/oder Bodenbearbeitungsmaschine.

Es hat sich beim landwirtschaftlichen Anbau von Nutzpflanzen vielfach erwiesen, dass durch eine möglichst exakt eingehaltene und über den Pflanzenbestand gleichmäßige Ablagetiefe des Saatguts ein wesentlich verbesserter Feldaufgang sowie ein gleichmäßigerer Pflanzenbestand erreicht werden kann. Mit diesen positiven Effekten ist gleichzeitig ein höherer Ertrag verbunden. Außerdem können mit der Aussaat verbundene Düngemaßnahmen und den aufwachsenden Pflanzenbestand pflegende und schützende Pflanzenschutzmaßnahmen deutlich gezielter geplant und umgesetzt werden.

Da die permanente Aufrechterhaltung einer vorgegebenen konstanten Ablagetiefe bei der Aussaat jedoch in der Praxis nicht immer zu gewährleisten ist, was unter anderem mit den unterschiedlichen Bodenbedingungen von zu bearbeitenden landwirtschaftlichen Flächen zusammenhängen kann, wurden bereits sog. "AutoForce"-Systeme entwickelt und eingesetzt. Diese Systeme sollen im Wesentlichen für eine gleichbleibende Ablagetiefe durch eine Anpassung einer Vorspannkraft mit welcher die Arbeitsaggregate zur Aussaat (z.B. Säschare) entlang einer Bodenfläche geführt werden bei der Aussaat sorgen. Derartige sog. "AutoForce"-Systeme wurden insbesondere im Bereich der Einzelkornsaat bekannt und werden im Zusammenhang mit der dabei verwendeten Maschinentechnik bereits seit einigen Jahren in der Praxis eingesetzt.

In diesem Zusammenhang beschreibt die DE 3 430136 eine landwirtschaftliche Maschine in Form einer Drillmaschine mit einem Rahmen und daran höhenverschwenkbar angeordneten Arbeitsaggregaten in Form von Säscharen. Eine Erfassungseinrichtung in Form eines berührungslosen Sensors ist an den Säscharen angeordnet, um Parameterwerte der Säschare während der Aussaat, d.h. während der Führung dieser entlang der Bodenfläche zu erfassen.

Die US 8 275 525 beschreibt ein automatisches System zum Verändern einer Lage von Arbeitsaggregaten in Form eines Anpressdrucks für eine Gruppe von Arbeitsaggregaten, insbesondere von Schneidscheiben von Arbeitsaggregaten einer landwirtschaftlichen Maschine. Jeder Schneidscheibe ist eine Tiefeneinstellvorrichtung und ein Anpressmechanismus zugeordnet zur Einstellung einer Schneidtiefe und des Anpressdrucks. Eine Erfassungseinrichtung erfasst mindestens einen Parameter in Form einer Last einer Tiefeneinstellvorrichtung, woraufhin der Anpressmechanismus automatisch den Anpressdruck der Schneidscheiben einstellt. Dadurch kann die Arbeitstiefe der Scheiben, die in die Bodenoberfläche eindringen relativ konstant gehalten werden und ein übermäßiger oder zu geringer Anpressdruck (z.B. auch als Schardruck bezeichnet) verhindert werden.

Bei den im Stand der Technik bekannten Systemen erfolgt eine Einstellung der Arbeitstiefe jeweils basierend auf den Messgrößen von gleichen Sensoren, d.h. unabhängig von der jeweiligen Position der Arbeitsaggregate werden zur Steuerung der Arbeitstiefe jeweils die Messgrößen von gleichen Sensoren in die Steuerung mit einbezogen. Eine Unterscheidung ob bspw. die Arbeitsaggregate schon eine länge Wegstrecke sich in Bodenkontakt befinden oder nicht, erfolgt nicht. Somit ist mittels der aus dem Stand der Technik bekannten Systemen keine Anpassung an verschiedene Arbeitsbedingungen der Arbeitsaggregate möglich.

Im praktischen Einsatz solcher Systeme hat sich jedoch erwiesen, dass die Neuanpassung der Arbeitstiefe nach dem Aushub der Arbeitsaggregate beispielsweise bei einem Wendevorgang am Vorgewende nicht die gewünschte Genauigkeit liefert, bzw. es mitunter zu lange dauert, bis die gewünschte Genauigkeit erreicht wird. Nach dem Absenken der Arbeitsaggregate zum Boden und der Fortsetzung der Fahrt bis zum Zeitpunkt, bis eine optimale Arbeitstiefe erreicht ist kann bspw. eine Wegstrecke von bis zu 15 Meter oder mehr mit einer ungenauen Einstellung bearbeitet werden. Die anfängliche Bearbeitung nach Absenken erfolgt somit nicht in richtiger Arbeitstiefe und liefert aus diesem Grund keine optimalen Ergebnisse.

Aufgabe der Erfindung ist es somit, die beschriebenen Nachteile des Standes der Technik zu beseitigen. Insbesondere soll eine optimale Tiefeneinstellung der Arbeitstiefe der Arbeitsaggregate durch ein Verändern der Lage der Arbeitsaggregate zum Boden hin garantiert werden. Insbesondere ist es die Aufgabe der Erfindung, eine verbesserte Arbeitstiefeneinstellung der Arbeitsaggregate bereitzustellen, welche weitgehend unabhängig von jeweils herrschenden Bodenbedingungen und dem Aufbau der jeweils eingesetzten Maschine in der Lage ist, um vorzugsweise eine gewünschte Ablagetiefe von auszubringenden Ausbringmaterial oder eine Arbeitstiefe mit einer vorgegebenen Konstanz einzuhalten.

Diese Aufgaben werden gelöst durch ein Steuersystem mit den Merkmalen des unabhängigen Anspruchs 1, durch ein Verfahren zum Verändern der Lage von an einer landwirtschaftlichen Maschine angebrachten Arbeitsaggregaten mit den Merkmalen des Verfahrensanspruchs 16, sowie durch eine landwirtschaftliche Maschine mit den Merkmalen des Anspruchs 17. Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird ein Steuersystem zum Verändern der Lage von an einer landwirtschaftlichen Maschine angebrachten Arbeitsaggregaten zur Aussaat und/oder zur Bodenbearbeitung bereitgestellt. Die landwirtschaftliche Maschine umfasst das Steuersystem und/oder ist mit dem Steuersystem signalverbunden und/oder verbindbar. Die vorliegende Erfindung kann bei vielen landwirtschaftlichen Maschinen, insbesondere bei landwirtschaftlichen Verteilmaschinen zum Einsatz kommen, und zwar insbesondere bei Sämaschinen zur Aussaat von landwirtschaftlichen Verteilgütern wie Saatgut, Dünger oder dergl., wobei die Verteilgüter sowohl in granularer als auch in flüssiger Form vorliegen können. Es ist auch möglich, dass die landwirtschaftliche Maschine zusätzlich eine Bodenbearbeitungsmaschine umfasst und/oder als eine Bodenbearbeitungsmaschine ausgeführt ist und die Arbeitsaggregate zum Bearbeiten des Bodens ausgebildet sind.

Die Arbeitsaggregate umfassen vorzugsweise zumindest eine Säeinheit oder ein Säaggregat mit Säschar und dazugehörigen Komponenten. Die Säeinheit, respektive das Säschar kann bspw. ein Scheibenschar (z.B. Einscheibenschar, Doppelscheibenschar oder dergl.), ein Zinkensäschar oder dergl. sein. Außerdem kann mindestens eine Druckrolle, in Fahrtrichtung der Maschine hinter der Säeinheit angeordnet sein, um mit Druck auf der Bodenoberfläche abzurollen und somit eine durch die Säeinheit gebildete Furche zu schließen und/oder zu verdichten. Je nach Maschinenzweck können die Arbeitsaggregate auch als Bodenbearbeitungswerkzeuge ausgeführt sein. Die Arbeitsaggregate können insbesondere derartig ausgeführt und an der landwirtschaftlichen Maschine angebracht (z.B. gelagert) sein, dass deren Lage auf die nachfolgend beschriebene und erfindungsgemäße Weise verändert und insbesondere eine Arbeitstiefe in der Bodenkontaktposition im Wesentlichen konstant gehalten werden kann. So kann es sich bei den Arbeitsaggregaten bspw. auch um Scheibenwerkzeuge oder Zinkenschare handeln, die in erster Linie der Vorbereitung des Erdbereichs für eine weitere Behandlung wie insbesondere eine Aussaat dienen können.

Das Verändern der Lage der Arbeitsaggregate umfasst ein Verschwenken der Arbeitsaggregate zwischen einer Nichtbodenkontaktposition und einer Bodenkontaktposition sowie eine Lageregelung während der Bodenkontaktposition.

Das Verändern der Lage der Arbeitsaggregate erfolgt durch ein mittelbares und/oder unmittelbares Steuern und/oder Regeln der Lage der Arbeitsaggregate mittels einer Stelleinrichtung, wobei das Steuern und/oder Regeln der Stelleinrichtung basierend auf von durch eine Steuereinrichtung erzeugten Stellsignalen für die Stelleinrichtung erfolgt.

Das mittelbare Steuern und/oder Regeln der Lage kann bspw. mittels Zwischenglieder und/oder Zusatzrahmen oder dergl. erfolgen. Bspw. kann durch eine Lageänderung eines Trägers die Lage der Arbeitsaggregate, welche am Träger montiert sind verändert werden. Alternativ oder ergänzend kann die Lage der Arbeitsaggregate durch ein unmittelbares Steuer und/oder Regeln verändert werden, wobei die Lage der Arbeitsaggregate bspw. direkt und ohne Zwischenglieder und/oder ohne Zusatzrahmen durch die Stelleinrichtung verändert wird.

Das Verändern der Lage der Arbeitsaggregate durch das Steuern und/oder Regeln der Lage der Arbeitsaggregate mittels der Stelleinrichtung kann eine Steuerung und/oder Regelung eines Arbeitsaggregats umfassen. Demnach ist es möglich, bspw. die Lage eines einzigen Arbeitsaggregats zu Steuern und/oder zu Regeln. Beispielsweise ist es möglich, dass dem Arbeitsaggregat eine Erfassungseinrichtung zugeordnet ist, das heißt wirktechnisch mit dieser gekoppelt ist. Es ist auch möglich, die Lage von zwei oder mehreren Arbeitsaggregaten gleichzeitig zu Steuern und/oder zu Regeln. Es ist denkbar, dass bspw. innerhalb einer Gruppe von mehreren Arbeitsaggregaten, ein oder mehrere Erfassungseinrichtungen einem oder mehreren Arbeitsaggregaten zugeordnet sind, das heißt wirktechnisch gekoppelt sind. Es ist auch möglich, dass jedem Arbeitsaggregat eine Erfassungseinrichtung zugeordnet bzw. wirktechnisch gekoppelt ist.

Das Verändern der Lage der Arbeitsaggregate kann sich sowohl auf eine Kraftregelung (z.B. Schardruckregelung) als auch auf eine Arbeitstiefenregelung (z.B. Sätiefenregelung für Säschare) beziehen bzw. kann diese umfassen. Dabei ist zusätzlich zu berücksichtigen, dass sich durch eine Veränderung einer auf ein Arbeitsaggregat wirkenden Kraft (z.B. Schardruck) mitunter auch eine Arbeitstiefe (z.B. Sätiefe) mit verändern kann, und dass sich zudem durch eine Veränderung der Arbeitstiefe (z.B. Sätiefe) auch eine Kraft (z.B. Schardruck) verändern kann, d.h. die zu beeinflussenden Größen können je nach Bauart jeweils in Korrelation zueinanderstehen. Ob nun mittels der erfindungsgemäßen landwirtschaftlichen Maschine eher eine konstante Kraft oder eine konstante Arbeitstiefe angestrebt und die entsprechende Regelung durchgeführt wird, ist demnach insbesondere abhängig von der Art der verwendeten Erfassungseinrichtung und/oder der Bauart der Arbeitsaggregate und/oder deren Lagerung an der landwirtschaftlichen Maschine. Als vorteilhaft hat sich jedoch insbesondere eine Regelung auf die gewünschte Arbeitstiefe wie bspw. der Sätiefe herausgestellt.

Gemäß einem weiteren Aspekt umfasst das Steuersystem eine Erfassungseinrichtung, die zur Vorgabe von Parameterwerten eingerichtet ist. Die Erfassungseinrichtung kann durch zumindest einen Sensor, vorzugsweise zwei oder mehreren identische oder unterschiedliche Eigenschaften und/oder Messgrößen erfassende Sensoren gebildet sein. Bspw. können identische und/oder unterschiedliche physikalische Messgrößen erfasst werden. Als Erfassungseinrichtung können beispielsweise ein oder mehrere Neigungssensor(en), Beschleunigungssensor(en), Spannungssensor(en), Drucksensor(en), Winkelsensor(en), Ultraschallsensor (en), mechanischen Sensor(en) und/oder pyroelektrische Sensor(en) verwendet werden.

Um eine verbesserte Tiefeneinstellung der Arbeitstiefe der Arbeitsaggregate, welche weitgehend unabhängig von jeweils herrschenden Bodenbedingungen und dem Aufbau der jeweils eingesetzten Maschine in der Lage ist, vorzugsweise eine gewünschte Ablagetiefe von auszubringenden Ausbringmaterial oder eine Arbeitstiefe mit einer vorgegebenen Konstanz einzuhalten, ist erfindungsgemäß vorgesehen, dass die Steuereinrichtung eingerichtet ist, Stellsignale zum Verändern der Lage der Arbeitsaggregate während der Bodenkontaktposition basierend auf Parametersätzen, welche Parametersätze jeweils durch zumindest einen erfassten Parameterwert definiert und/oder definierbar sind, zu erzeugen.

Erfindungsgemäß wird somit durch die Bereitstellung von mehreren Parametersätzen ein Steuersystem geschaffen, mit welchem bei sich verändernden Arbeitsbedingungen, wie bspw. bei einem Überführen der Arbeitsaggregate aus der Nichtbodenkontaktposition in die Bodenkontaktposition nach bspw. dem Vorgewende mit einer hohen Geschwindigkeit und einer hohen Genauigkeit die Veränderung der Lage der Arbeitsaggregate erreicht wird, wodurch gegenüber dem Stand der Technik eine gewünschte Lage, insbesondere eine Ablagetiefe und/oder Arbeitstiefe schneller und exakter erreicht werden kann.

Gemäß einem alternativen oder ergänzenden Aspekt der Erfindung, umfassen die Parametersätze zumindest einen ersten Parametersatz, welcher durch zumindest einen Parameterwert definiert und/oder definierbar ist und zumindest einen zweiten Parametersatz, welcher durch zumindest einen Parameterwert, vorzugsweise zumindest zwei oder mehr Parameterwerte definiert und/oder definierbar ist. Um eine flexible Veränderung der Lage der Arbeitsaggregate zu ermöglichen, ist es auch denkbar, dass mehr als zwei verschiedene Parametersätze vorgesehen und/oder in der Steuereinrichtung hinterlegt und/oder hinterlegbar sind. Durch die Parametersätze ist es erfindungsgemäß somit möglich, dass zur Steuerung und/oder Regelung der Arbeitsaggregate in der Bodenkontaktposition jeweils ein für die jeweiligen Bedingungen optimierter Parametersatz eingesetzt wird.

Erfindungsgemäß kann die Steuereinrichtung eingerichtet sein, die vorgegebenen Parameterwerte der Erfassungseinrichtung miteinander zu kombinieren und/oder einen Mittelwert zu bilden und/oder zu einer gemeinsamen Ausgangsgröße zu verrechnen. Die Parameterwerte umfassen bspw. Sensorwerte verschiedener Sensoren der Erfassungseinrichtung und/oder bspw. definierte und/oder definierbare Sensorwerte. Die Parameterwerte können somit mittels der Erfassungseinrichtung erfasste Sensorwerte oder bspw. eingegebene Parameterwerte eines Bedieners bspw. mittels einer Bedieneinrichtung oder aus einer Speichereinrichtung aufgerufene Parameterwerte umfassen. Ein Kombinieren der Parameterwerte kann umfassen, dass bspw. mehrere Parameterwerte zum Verändern der Lage der Arbeitsaggregate berücksichtigt werden. Das bedeutet, dass bspw. eine Gewichtung der Parameterwerte definiert und/oder definierbar ist und somit bspw. ein erster Parameterwert bevorzugt durch die Steuereinrichtung berücksichtigt wird. Ergänzend oder alternativ können mehrere Parameterwerte zur Bildung eines Mittelwerts durch die Steuereinrichtung verwendet werden. Eine weitere Möglichkeit sieht vor, verschiedene Parameterwerte bspw. einen erfassten Sensorwert und einen durch einen Bediener, bspw. mittels der Bedieneinrichtung vorgegebenen Parameterwert, zu einer gemeinsamen Ausgangsgröße zu verrechnen. Dadurch wird ermöglicht, unterschiedliche Parameterwerte miteinander zu kombinieren, einen Mittelwert zu bilden und/oder zu verrechnen. Die Parameterwerte können vorzugsweise Soll-Größen, und/oder Ist-Größen und/oder Schwellenwerte umfassen.

Vorzugsweise kann die Steuereinrichtung eingerichtet sein, die vorgegebenen Parameterwerte der Erfassungseinrichtung durch eine Sensordatenfusion miteinander zu kombinieren und/oder einen Mittelwert zu bilden und/oder zu einer gemeinsamen Ausgangsgröße zu verrechnen. Wobei zur Sensordatenfusion bspw. Tiefpassfilter, Kalmannfilter oder dergl. eingesetzt werden können.

Gemäß einer Ausführungsform können mittels der Erfassungseinrichtung bspw. eines Sensors Abstände zwischen einer Bodenoberfläche und eines oder mehreren Referenzteilen der landwirtschaftlichen Maschine gemessen werden. Es ist dadurch möglich, einen Abstand zwischen bspw. einem Maschinenrahmen der landwirtschaftlichen Maschine und einer Bodenoberfläche zur Erzeugung von Stellsignalen zum Verändern der Lage der Arbeitsaggregate während der Bodenkontaktposition zu verwenden.

Zur manuellen Eingabe bspw. der Parameterwerte kann die landwirtschaftliche Maschine die, respektive eine Bedieneinrichtung umfassen und/oder ist mit der Bedieneinrichtung signalverbunden und/oder verbindbar. Die Bedieneinrichtung (z.B. Terminal, mobiles Endgerät und/oder dergl.) kann z.B. zur Eingabe oder zum Einlesen von Parameterwerten verwendet werden. Die Bedieneinrichtung, kann zudem eingerichtet sein, eine graphische, optische und/oder haptische Ausgabe durchzuführen. Im Kontext der Erfindung ist es auch möglich, bspw. Parameterwerte aus der Speichereinrichtung mittels der Bedieneinrichtung aufzurufen.

Es ist möglich, dass in der Speichereinrichtung Schwellenwerte für die vorgegebenen Parameterwerte hinterlegt und/oder hinterlegbar sind und dass diese Schwellenwerte von der Steuereinrichtung zur Erzeugung der Stellsignale für die Stelleinrichtung berücksichtigt werden.

Bei Erreichen eines in der Speichereinrichtung hinterlegten Schwellenwerts kann die Steuereinrichtung zur Berücksichtigung der Schwellenwerte eingerichtet sein, einen Wechsel zwischen den Parametersätzen zum Steuern und/oder Regeln der Lage in der Bodenkontaktposition zu veranlassen.

Die Schwellenwerte können bspw. durch einen Bediener bspw. mittels der Bedieneinrichtung hinterlegt werden und/oder bspw. aus der Speichereinrichtung aufgerufen werden. Es ist alternativ oder ergänzend auch denkbar, dass somit kurzzeitig auftretende Extremwerte der Sensoren nicht berücksichtigt werden.

Die Steuereinrichtung kann eingerichtet sein, die mit der Erfassungseinrichtung vorgegebenen, und die Parametersätze definierenden, Parameterwerte zu speichern, und diese gespeicherten Parameterwerte, vorzugsweise nach dem Verschwenken der Arbeitsaggregate aus der Nichtbodenkontaktposition in die Bodenkontaktposition, zum Erzeugen von Stellsignalen während der Lageregelung der Arbeitsaggregate während der Bodenkontaktposition aus der Speichereinrichtung aufzurufen. Es ist möglich, dass der erste Parametersatz bspw. nur einen Parameterwert beinhaltet, somit kann eine schnelle Steuerung und/oder Regelung der Lage der Arbeitsaggregate ermöglicht werden. Der zweite Parametersatz kann bspw. mehrere Parameterwerte umfassen, wodurch eine genauere Lageregelung der Arbeitsaggregate ermöglicht wird. Es ist möglich, dass nach Erreichen des Schwellenwerts ein Wechsel zwischen dem ersten Parametersatz und dem zweiten Parametersatz veranlasst wird.

Alternativ oder ergänzend können gespeicherte Parameterwerte bspw. eines älteren, bereits abgeschlossenen Arbeitsvorgangs der landwirtschaftlichen Maschine, erneut aufgerufen werden. Es ist dadurch ermöglicht, aktuell erfasste Parameterwerte und/oder benutzerdefinierte bzw. gespeicherte Parameterwerte zu verwenden.

Anhand der Schwellenwerte kann somit die Steuereinrichtung eingerichtet sein, automatisiert einen jeweils optimierten Parametersatz zu verwenden. Befinden sich bspw. die Arbeitsaggregate in der Nichtbodenkontaktposition kann dies bspw. einem Schwellenwert entsprechen und die Steuereinrichtung nach Überführung der Arbeitsaggregate aus der Nichtbodenkontaktposition in die Bodenkontaktposition eingerichtet sein, einen hierfür optimierten Parametersatz zu verwenden, wobei dieser Parametersatz bspw. durch eine Verwendung von möglichst wenig Parameterwerten gekennzeichnet sein kann, um somit möglichst schnell eine zumindest weitgehend gewünschte Arbeitstiefe zu erreichen.

Um verschiedene Betriebszustände zum richtigen Zeitpunkt bereitzustellen, ist es möglich, dass das Vorgeben der Parameterwerte durch die Erfassungseinrichtung zumindest ein sensorisches Erfassen von Parameterwerten und/oder ein manuelles Definieren von Parameterwerten und/oder ein Aufrufen von in der Speichereinrichtung gespeicherten Parameterwerten umfasst. Das sensorische Erfassen ermöglicht vorzugsweise ein Vorgeben von Parameterwerten mittels zumindest einen Sensor. Das manuelle Definieren der Parameterwerte kann bspw. eine Eingabe eines und/oder mehrere Parameterwerte durch einen Bediener bspw. mittels der Bedieneinrichtung, umfassen. Dadurch ist bspw. möglich, dass ein erster Parametersatz sensorisch erfasste Werte bspw. der Lage der Arbeitsaggregate, insbesondere gegenüber der Bodenoberfläche und/oder einem Maschinenrahmen der landwirtschaftlichen Maschine und ein zweiter Parametersatz bspw. manuell definierte Parameterwerte durch einen Bediener bspw. mittels der Bedieneinrichtung umfasst. Eine weitere Möglichkeit wäre das bspw. drei Parametersätze durch die Steuereinrichtung zum Erzeugen von Stellsignalen für die Stelleinrichtung verwendet werden.

Erfindungsgemäß kann außerdem vorgesehen sein, dass mittels der Erfassungseinrichtung verschiedene Arten der Parameterwerte vorgegeben werden können, welche vorzugsweise abhängig sind von zumindest einer Lage der Arbeitsaggregate, insbesondere gegenüber einer Bodenoberfläche und/oder einem Maschinenrahmen, einer Art des Ausbringmaterials zur Aussaat, einer Maschinengeometrie der landwirtschaftlichen Maschine, eines Standorts der landwirtschaftlichen Maschine auf einer landwirtschaftlichen Fläche und/oder eines Zeitintervalls während welchem die Arbeitsaggregate in der Bodenkontaktposition sind. Dadurch können möglichst viele Faktoren berücksichtigt werden, welche bspw. Einfluss auf eine Ablagetiefe des Saatguts haben. Es ist dadurch möglich, dass bspw. das Gewicht der Maschine berücksichtigt wird, bei der Lageregelung der Arbeitsaggregate während der Bodenkontaktposition.

Gemäß einem weiteren Aspekt der Erfindung ist es möglich, dass sich die, durch zumindest einen Parameterwert definierten und/oder definierbaren, Parametersätze in deren Anzahl und/oder in deren Methoden der Vorgabe und/oder in deren Art des Parameterwerts in und/oder um zumindest einen Parameterwert unterscheiden.

Die Veränderung der Lage der Arbeitsaggregate umfasst vorzugsweise eine Veränderung der Auslenkung der Arbeitsaggregate gegenüber einem Maschinenrahmen und/oder eine Veränderung der Winkellage der Arbeitsaggregate gegenüber dem Maschinenrahmen und/oder eine Veränderung der Höhenlage der Arbeitsaggregate gegenüber dem Maschinenrahmen.

Die Veränderung der Lage der Arbeitsaggregate umfasst vorzugsweise eine Veränderung der Auslenkung eines Trägers zur Lagerung der Arbeitsaggregate gegenüber dem Maschinenrahmen und/oder eine Veränderung der Winkellage des Trägers zur Lagerung der Arbeitsaggregate gegenüber dem Maschinenrahmen und/oder eine Veränderung der Höhenlage des Trägers zur Lagerung der Arbeitsaggregate gegenüber dem Maschinenrahmen.

Es ist auch möglich, das Ausbringmaterial zu berücksichtigen, vorzugsweise verschiedene Ablagetiefen des jeweiligen Ausbringmaterials. Bspw. kann sich mit der Größe und einer Art des Ausbringmaterials die Ablagetiefe ändern, wobei dies wiederum als Parameterwert in die Definition der Parametersätze mit einfließen kann.

Außerdem kann die Maschinengeometrie bspw. Parameterwerte verschiedener Formen, Abmessungen oder Konfigurationen landwirtschaftlicher Maschinen wie bspw. ein Gewicht der Maschine oder etwa Größenverhältnisse der Maschine umfassen.

Beim Standort der Maschine, kann insbesondere die aktuelle Position der landwirtschaftlichen Maschine auf der landwirtschaftlichen Fläche berücksichtigt werden. Der Standort bzw. die aktuelle Position kann bspw. durch ein Standortbestimmungsmodul erfasst werden, welches an der landwirtschaftlichen Maschine und/oder bspw. an einem Traktor oder dergl. verbaut ist. Das Standortbestimmungsmodul kann satellitengestützt sein und bspw. eine GPS-Standortbestimmungseinrichtung, eine Galileo-Standortbestimmungseinrichtung, eine Glonass-Standortbestimmungseinrichtung oder eine Beidou-Standortbestimmungseinrichtung sein. Durch einen Abgleich der aktuellen Position der Maschine ist es auch möglich sich verändernde Umgebungsbedingungen wie bspw. Bodengegebenheit zu berücksichtigen. Diese Umgebungsbedingungen können bspw. in der Speichereinrichtung hinterlegt werden und mittels der Steuereinrichtung mit dem aktuellen Standort abgeglichen werden.

Es ist möglich, dass zu Teilbereichen der landwirtschaftlichen Fläche Parametersätze hinterlegt sind, welche somit mittels der Steuereinrichtung automatisiert anhand der tatsächlichen Position abrufbar sind.

Außerdem kann ein Zeitintervall während welchem sich die Arbeitsaggregate in der Bodenkontaktposition befinden, bspw. durch die Steuereinrichtung erfasst werden. Es ist bspw. möglich, dass ein Bediener das Zeitintervall mittels der Bedieneinrichtung vorgibt, um eine Länge des Zeitintervalls zu definieren, während welchem sich die Arbeitsaggregate bspw. in der Bodenkontaktposition befinden. Beispielsweise kann nach der Überführung der Arbeitsaggregate aus der Nichtbodenkontaktposition in die Bodenkontaktposition zunächst für ein bestimmtes Zeitintervall bspw. ein erster Parametersatz zum Regeln der Lage der Arbeitsaggregate während der Bodenkontaktposition verwendet werden. Nach Ablauf dieses Zeitintervalls kann ein Wechsel zwischen den Parametersätzen veranlasst werden und bspw. ein zweiter Parametersatz zum Regeln der Lage der Arbeitsaggregate während der Bodenkontaktposition verwendet werden. Es ist ergänzend oder alternativ möglich, dass bspw. eine Wegstrecke bspw. anhand einer Fahrgeschwindigkeit der landwirtschaftlichen Maschine verwendet werden kann, um einen Parameterwechsel zwischen den Parametersätzen zu veranlassen. Es ist auch denkbar, dass die Steuereinrichtung eingerichtet ist, ein Zeitintervall auf Basis von anderen Parameterwerten vorzugeben und/oder ein gespeichertes Zeitintervall zu verwenden.

Gemäß einem weiteren Aspekt der Erfindung ist es möglich, dass die Erfassungseinrichtung mit der Stelleinrichtung wirktechnisch gekoppelt ist und einen Steuerdruck und/oder einen Hubweg zumindest eines Aktors erfasst, welcher Aktor Teil der Stelleinrichtung ist. Der zumindest eine Aktor der Stelleinrichtung umfasst zumindest einen pneumatisch, hydraulisch und/oder elektrisch betriebenen Aktor. Der zumindest eine Aktor kann zweckmäßig an der landwirtschaftlichen Maschine montiert sein. Es ist möglich, verschiedene Aktoren wie beispielsweise Einfachwirkende und/oder Doppeltwirkende Aktoren zu verwenden und/oder dass bspw. ein Aktor die gesamte Stelleinrichtung bildet oder alternativ zwei oder mehrere Aktoren die Stelleinrichtung ausbilden. Es ist denkbar das bspw. ein erster Aktor als Einfachwirkender Aktor und ein zweiter Aktor als Doppeltwirkender Aktor ausbildet ist. Ebenso ist es möglich das bspw. der erste Aktor hydraulisch und der zweite Aktor elektrisch betrieben wird. Es ist auch denkbar das vorzugsweise zwei oder mehrere Aktoren vorhanden sind, wobei vorzugsweise je ein Aktor die Lage von zumindest zwei oder mehrere Arbeitsaggregaten und/oder einen oder mehrere Träger mittelbar und/oder unmittelbar steuert und/oder regelt. Der Aktor ist vorzugsweise als Linearantrieb, insbesondere als Zylinder ausgebildet. Alternativ kann der Aktor auch einen elektrischen Spindelantrieb umfassen.

Ein Erfassen des Steuerdrucks und/oder des Hubwegs des Aktors kann durch ein sensorisches Erfassen mittels der Erfassungseinrichtung erfolgen. Beispielsweise kann ein Steuerdruck des Aktors durch einen oder mehrere Drucksensoren erfasst werden und ergänzend oder alternativ dazu kann ein Hubweg des Aktors durch einen oder mehrere Wegmesssysteme erfasst werden. Dadurch ist es möglich, dass bspw. ein Steuerdruck und/oder Hubweg des Aktors im Wesentlichen auf einen im Wesentlichen konstanten Wert oder einen Differenzwert durch die Steuereinrichtung gesteuert und/oder geregelt werden kann. Es ist somit möglich, dass bspw. der Hubweg und/oder der Steuerdruck als Parameterwerte dienen können.

Nach einer optionalen Modifikation der Erfindung kann vorgesehen sein, dass der Träger und der Maschinenrahmen über mindestens einen in seiner Länge veränderbaren Aktor miteinander verbunden sind, und die Steuereinrichtung dazu ausgelegt ist, in Abhängigkeit bspw. eines Parametersatzes die Länge des mindestens einen Aktors zu variieren, wobei vorzugsweise zwei oder mehr Aktoren vorgesehen sind, welche bspw. eine Höhenlage und/oder Winkellage und/oder eine Auslenkung des Trägers gegenüber dem Maschinenrahmen vornehmen. Dabei kann vorgesehen sein, dass der Aktor mit einem seiner Enden direkt an dem Maschinenrahmen oder einem damit starr in Verbindung stehenden Element und mit ihrem anderen Ende direkt an dem Träger oder einem damit starr in Verbindung stehenden Element angelenkt ist.

Die Erfassungseinrichtung kann vorzugsweise mit dem Träger und/oder zumindest einem, vorzugsweise zwei oder mehreren Arbeitsaggregaten und/oder dem Maschinenrahmen wirktechnisch gekoppelt sein. Dadurch ist es möglich, bspw. die Veränderung der Lage der Arbeitsaggregate und/oder des Trägers gegenüber dem Maschinenrahmen mittels der Erfassungseinrichtung vorzugsweise sensorisch zu erfassen.

Gemäß einer Ausführungsform ist es möglich, dass der Träger gegenüber dem Maschinenrahmen mittels einer quer zur Fahrtrichtung orientierten Achse drehbar am Maschinenrahmen gelagert ist.

Zum Verändern der Lage der Arbeitsaggregate kann der Träger gegenüber dem Maschinenrahmen mittels einer translatorischen Bewegung und/oder einer linearen Bewegung und/oder einer rotatorischen Bewegung mittelbar oder unmittelbar mittels der Stelleinrichtung bewegt werden.

Die jeweilige translatorische Bewegung und/oder lineare Bewegung und/oder rotatorische Bewegung kann jeweils unmittelbar oder mittelbar durch einen, die Stelleinrichtung bildenden Aktor oder durch mehrere die Stelleinrichtung bildende Aktoren umgesetzt werden.

Der Erfindung liegt die Erkenntnis zu Grunde, dass es mitunter nicht ausreichen kann, nur einen Parameterwert in Form bspw. eines Winkels des Arbeitsaggregats gegenüber dem Maschinenrahmen mittels der Erfassungseinrichtung vorzugeben oder bspw. einen auf das Arbeitsaggregat wirkenden Druck vorzugeben, da es vorkommen kann, dass zwar der Winkel korrekt ist, eine Arbeitstiefe der Arbeitsaggregate ggf. jedoch nicht, was in der Regel bspw. durch ein Versinken der gesamten Maschine in eine Bodenoberfläche hervorgerufen wird. Dementsprechend kann es als wichtiger Aspekt der vorliegenden Erfindung gesehen werden, jeweils zwei, zweckmäßig insbesondere mehrere unterschiedliche Parameterwerte vorzugeben, und anhand dieser unterschiedlichen Parameterwerte die Lageregelung während der Bodenkontaktposition zu Steuern und/oder Regeln.

Erfindungsgemäß ist insbesondere vorgesehen, neben einem Parameterwert, welcher bspw. die Lage (z.B. Drehlage und/oder Höhenlage) des Arbeitsaggregats gegenüber einem Maschinenrahmen bzw. einer Bodenoberfläche zudem die Lage (z.B. wiederum Drehlage und/oder Höhenlage) des Maschinenrahmen gegenüber einer Bodenfläche vorzugeben.

Am Träger ist gemäß einer Ausführungsvariante der erfindungsgemäßen landwirtschaftlichen Maschine zumindest ein Arbeitsaggregat angebaut insbesondere sind am Träger beabstandet zueinander mehrere Arbeitsaggregate angebaut, wobei dieser Abstand auch als sog. Strichabstand bezeichnet werden kann. Gemäß der vorliegenden Erfindung werden die Arbeitsaggregate insbesondere in einem Strichabstand zueinander angeordnet welcher bspw. kleiner ist als 50 cm oder kleiner ist als 30 cm und im Wesentlichen 15cm betragen kann.

Es ist zudem möglich, dass am Träger verschiedene Arbeitsaggregate angebracht sind, so dass bspw. nebeneinander kurze und lange Arbeitsaggregate angebracht sein können. Es ist auch möglich, dass die landwirtschaftliche Maschine mehrere Träger umfasst, insbesondere mehrere hintereinander und/oder nebeneinander angeordnete Träger, wobei an den Trägern wiederum unterschiedliche Arbeitsaggregate (z.B. lange und kurze) angebracht sein können. Die Arbeitsaggregate können bspw. jeweils mittels eines Parallelogramms am Träger und/oder am Maschinenrahmen angebracht sein.

Alternativ oder ergänzend kann neben dem Träger ein Aufstandspunkt einer dem Arbeitsaggregat zugeordneten Tiefenführungs- und/oder Druckrolle verstellt werden, bspw. entsprechend gesteuert und/oder geregelt werden.

Es ist möglich, dass bei mehreren in Fahrtrichtung hintereinander angeordneten Arbeitsaggregaten, die Steuereinrichtung eingerichtet ist, dass bei einer Überfahrt über eine landwirtschaftliche Fläche, bspw. ein vorderer Träger und/oder ein hinterer Träger auf Höhe des jeweiligen Arbeitsaggregats einen im Wesentlichen konstanten Abstand zu einer Bodenoberfläche beibehält. Zudem kann auch vorgesehen sein, dass ein in Fahrtrichtung zwischen den Arbeitsaggregaten liegenden Punkt auf einen im Wesentlichen konstanten Abstand zu einer Bodenoberfläche gehalten wird. Es ist auch möglich, dass ein Abstand eines Trägers und eines Maschinenrahmens zur einer Bodenoberfläche auf einen im Wesentlichen konstanten Abstand gehalten wird.

Gemäß einer weiteren Ausführungsvariante der erfindungsgemäßen landwirtschaftlichen Maschine können am Träger auch andere Bodenbearbeitungswerkzeuge angebracht sein, die insbesondere nachfolgenden Säscharen vorgeordnet sein können und in erster Linie der Vorbereitung eines Saatbetts durch Zerkleinerung eines Erdreichs und Einebnung eines Ackerbodens dienen können. Das zuvor Beschriebene gilt somit in gleicher Weise für solche Arbeitsaggregate, die Teil einer komplexeren landwirtschaftlichen Maschine sein können.

Um ein sicheres Eindringen der Arbeitsaggregate auf einer landwirtschaftlichen Fläche bzw. Bodenfläche zu gewährleisen und um somit sicherzustellen, dass sich die Arbeitsaggregate in einer korrekten Lage bzw. Arbeitstiefe befinden, werden die Arbeitsaggregate vorzugsweise mit einer definierten und/oder definierbaren Vorspannkraft entlang der landwirtschaftlichen Fläche geführt. Zur Erzeugung dieser Vorspannkraft können die Arbeitsaggregate bspw. mittels einer elastischen Lagerung bzw. mittels elastischer Lagerelemente am Träger angebaut, respektive gelagert, insbesondere schwenkbar gelagert sein. Als elastische Lagerelemente können vorzugsweise sogenannte Gummischnurlagerung eingesetzt werden.

Ferner kann alternativ vorgesehen sein, dass das bspw. an einem Träger angeordnete Säschar starr an dem Träger befestigt ist, so dass es gegenüber dem Träger keinen Feder- oder Dämpfungsmechanismus gibt.

Das Steuersystem kann mit einem Standortbestimmungsmodul signalverbunden werden, welches zur Erfassung des Standorts der Maschine auf einer landwirtschaftlichen Fläche und/oder zum Bewegen der Maschine entlang von Fahrspuren, vorzugsweise an der landwirtschaftlichen Maschine angebracht ist. Alternativ kann das Standortbestimmungsmodul bspw. an einem Traktor oder dergl. angebracht sein und mit dem Steuersystem signalverbunden werden. Somit kann bspw. anhand einer festgelegten und/oder erfassten Position ein Wechsel der Parametersätze initiiert werden. Die Fahrspuren können eine bspw. durch den Bediener gefahrene Route und/oder eine durch das Steuersystem vordefinierte Route umfassen.

Die Steuereinrichtung weist bspw. eine Rechnereinheit, einen Bordcomputer und/oder dergl. auf und umfasst zudem einen Steuer- und/oder Regelkreis, vorzugsweise einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, vorzugsweise die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sei darauf hingewiesen, dass im Zusammenhang mit dem Steuersystem offenbarte Ausführungsformen und Merkmale auch Verfahrensgemäß und für eine landwirtschaftliche Maschine gelten und in beliebiger Weise und Frei miteinander kombinierbar sind. Dementsprechend sind alle Ausführungsformen und erfindungsgemäßen Merkmale sowohl für das Steuersystem als auch für das Verfahren und die landwirtschaftliche Maschine offenbart und beanspruchbar.

Die Erfindung umfasst zur Lösung der Aufgaben zudem ein Verfahren zum Verändern der Lage von an einer landwirtschaftlichen Maschine angebrachten Arbeitsaggregaten zur Aussaat und/oder Bodenbearbeitung, wobei das Verändern der Lage ein Verschwenken der Arbeitsaggregate zwischen einer Nichtbodenkontaktposition und einer Bodenkontaktposition sowie eine Lageregelung während der Bodenkontaktposition umfasst.

Das Verfahren umfasst außerdem das Verändern der Lage der Arbeitsaggregate durch ein mittelbares und/oder unmittelbares Steuern und/oder Regeln der Lage der Arbeitsaggregate mittels einer Stelleinrichtung, wobei das Steuern und/oder Regeln der Stelleinrichtung basierend auf von durch eine Steuereinrichtung erzeugten Stellsignalen für die Stelleinrichtung erfolgt.

Das Verfahren umfasst zudem ein Vorgeben von Parameterwerten mittels einer Erfassungseinrichtung.

Das Verfahren umfasst außerdem ein Erzeugen von Stellsignalen zum Verändern der Lage der Arbeitsaggregate während der Bodenkontaktposition basierend auf Parametersätzen, welche Parametersätze jeweils durch zumindest einen Parameterwert definiert und/oder definierbar sind, mittels der Steuereinrichtung.

Die Erfindung beansprucht nicht nur Schutz für das vorstehend beschriebene erfindungsgemäße Steuersystem und das erfindungsgemäße Verfahren. Vielmehr beansprucht die Erfindung auch Schutz für eine komplette landwirtschaftliche Maschine, insbesondere Sämaschine (z.B. zur Drillsaat und/oder zur Einzelkornsaat, und/oder dergl.) und/oder Bodenbearbeitungsmaschine mit einem solchen Steuersystem und/oder eine landwirtschaftliche Maschine, insbesondere Sämaschine und/oder Bodenbearbeitungsmaschine, welche eingerichtet ist, erfindungsgemäß das Verfahren auszuführen.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer Ausführungsvariante einer landwirtschaftlichen Maschine mit angebrachten Arbeitsaggregaten,
- Figur 2: eine Draufsicht auf eine landwirtschaftliche Maschine, welche auf einer landwirtschaftlichen Fläche bewegt wird,
- Figur 3a: eine Seitenansicht der an einer Maschine angebrachten Arbeitsaggregate während einer Nichtbodenkontaktposition,
- Figur 3b: eine Seitenansicht der an einer Maschine angebrachten Arbeitsaggregate während einer Bodenkontaktposition,

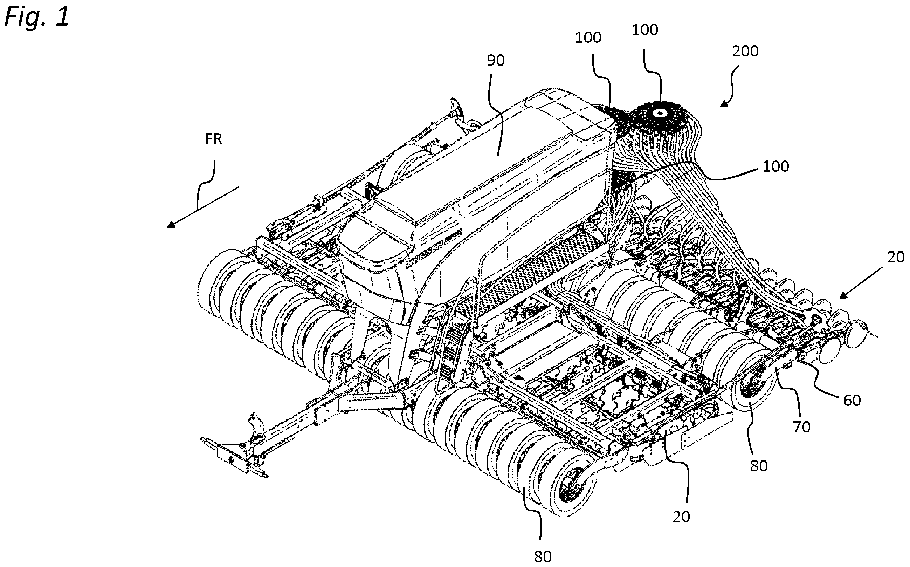

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 1 zeigt eine Ausführungsvariante einer landwirtschaftlichen Maschine 200, insbesondere in Form einer Sämaschine und einer Bodenbearbeitungsmaschine mit daran angebrachten Arbeitsaggregaten 20. Die Maschine 200 verfügt gemäß dem Ausführungsbeispiel Arbeitsaggregate 20 welche sowohl als Säschare, als auch Bodenbearbeitungswerkzeuge ausgeführt sind. Die Bodenbearbeitungswerkzeuge umfassen Scheibenartige Bodenbearbeitungswerkzeuge in Form von Sechscheiben. Die Maschine umfasst außerdem vorzugsweise zwei Packerwalzen 80, welche sich quer zur Fahrtrichtung FR erstrecken. Die Maschine 200 ist in Form einer gezogenen Maschine 200 ausgebildet und kann bspw. mittels eines Zugfahrzeugs (z.B. Traktor) gezogen werden. Alternativ kann die Maschine 200 auch als selbstfahrende Maschine 200 ausgebildet sein.

Gemäß einem weiteren Ausführungsbeispiel wäre es auch denkbar, dass die landwirtschaftliche Maschine 200 nur als Sämaschine oder Bodenbearbeitungsmaschine ausgebildet ist, und somit bspw. nur Säschare und/oder nur Bodenbearbeitungswerkzeuge umfasst.

Zum Mitführen der jeweiligen Verteilgüter wie Saatgut, Dünger oder dergl. verfügt die Maschine 200 einen Vorratsbehälter 90. Über ein Gebläse werden die jeweiligen Verteilgüter aus dem Vorratsbehälter 90 mittels eines Verteilsystems 110 über Schlauchleitungen durch drei Verteilertürme 100 zu den einzelnen Säscharen mittels Druckluft gespeist. Auf diese Weise kann mittels des Verteilsystems 110 bzw. den Verteilertürmen 100 den Säscharen eine definierte Menge an zu verteilenden Gütern zugeführt werden.

Die landwirtschaftliche Maschine 200 umfasst und/oder ist mit einem Steuersystem 10, nach einem der Ansprüche 1 bis 15 signalverbunden und/oder verbindbar. Das Steuersystem 10 ist zur Lageregelung der Arbeitsaggregate 20, vorzugsweise zum Ausbringen von landwirtschaftlichen Ausbringmaterial eingerichtet. Die landwirtschaftliche Maschine 200 ist eingerichtet das Verfahren nach Anspruch 16 auszuführen.

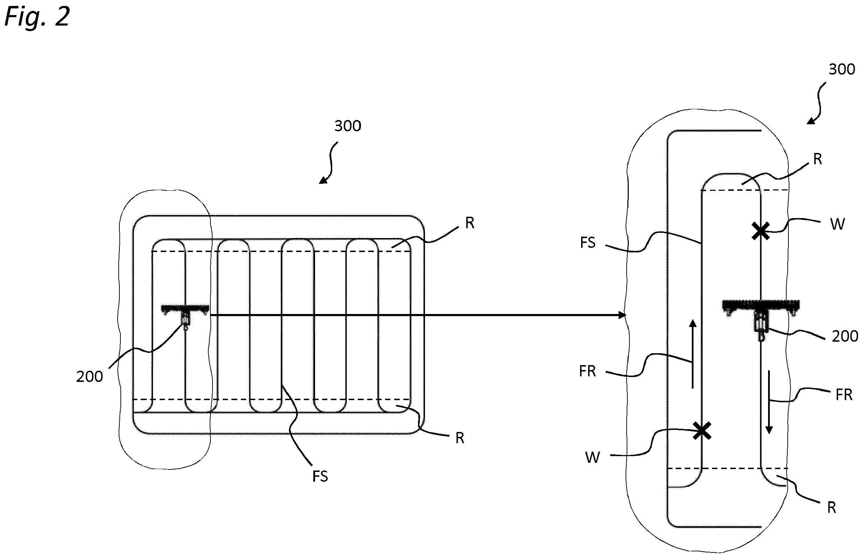

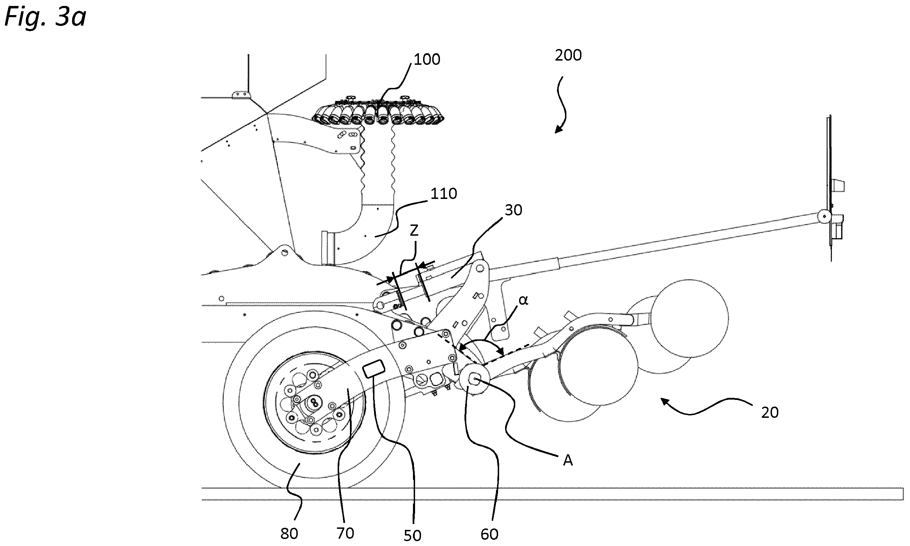

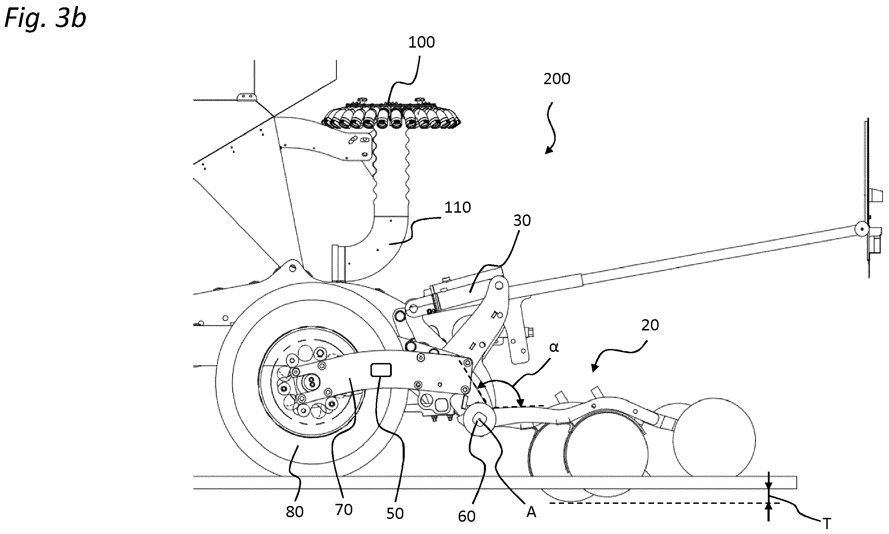

Figur 2 zeigt eine Draufsicht auf eine landwirtschaftliche Maschine 200, welche auf einer landwirtschaftlichen Fläche 300 bewegt wird. Die Lage der an der landwirtschaftlichen Maschine 200, zur Aussaat und/oder zur Bodenbearbeitung, angebrachten Arbeitsaggregate 20, kann durch ein Verschwenken der Arbeitsaggregate 20 zwischen einer Nichtbodenkontaktposition (vgl. Fig. 3a) und einer Bodenkontaktposition (vgl. Fig. 3b) sowie eine Lageregelung während der Bodenkontaktposition verändert werden.

Das Verändern der Lage der Arbeitsaggregate 20 erfolgt durch ein mittelbares und/oder unmittelbares Steuern und/oder Regeln der Lage der Arbeitsaggregate 20 mittels einer Stelleinrichtung 30 (siehe Figur 3a oder 3b). Das Steuern und/oder Regeln der Stelleinrichtung 30 erfolgt basierend auf von durch eine Steuereinrichtung 40 erzeugten Stellsignalen für die Stelleinrichtung 30.

Eine Erfassungseinrichtung 50 ist eingerichtet, zur Vorgabe von Parameterwerten. Die Erfassungseinrichtung 50 ist durch zumindest einen Sensor, vorzugsweise zwei oder mehreren identische oder unterschiedliche Eigenschaften und/oder Messgrößen erfassende Sensoren gebildet, welche Sensoren bspw. identische und/oder unterschiedliche physikalische Messgrößen erfassen können. Gemäß einem Ausführungsbeispiel kann mittels der Erfassungsrichtung 50 bspw. eine Winkellage eines Trägers 60 gegenüber einem Maschinenrahmen 70 zur Lagerung der Arbeitsaggregate 20 mittels eines Winkelsensors bestimmt werden und zur Lageregelung der Arbeitsaggregate 20 mittels der Erfassungseinrichtung 50 vorgegeben werden.

Die Steuereinrichtung 40 erzeugt Stellsignale zum Verändern der Lage der Arbeitsaggregate 20 während der Bodenkontaktposition basierend auf Parametersätzen. Die Parametersätze sind jeweils durch zumindest einen Parameterwert definiert und/oder definierbar.

Die Parametersätze umfassen gemäß einem Ausführungsbeispiel zumindest einen ersten Parametersatz, welcher durch zumindest einen mittels der Erfassungseinrichtung 50 vorgegebenen Parameterwert definiert und/oder definierbar ist und zumindest einen zweiten Parametersatz, welcher durch zumindest einen, vorzugsweise zwei oder mehr, mittels der Erfassungseinrichtung 50 vorgegebene Parameterwerte definiert und/oder definierbar ist.

Innerhalb einer Speichereinrichtung sind Schwellenwerte für Parameterwerte hinterlegt und/oder hinterlegbar. Die Schwellenwerte können von der Steuereinrichtung 40 zur Erzeugung von Stellsignalen für die Stelleinrichtung 30 berücksichtigt werden. Bei Erreichen des in der Speichereinrichtung hinterlegten Schwellenwerts, ist die Steuereinrichtung 40 eingerichtet, einen Wechsel W zwischen den Parametersätzen zu veranlassen. Gemäß einem Ausführungsbeispiel kann bspw. ein Bediener einen Schwellenwert manuell mittels der Bedieneinrichtung vorgeben, wobei der Schwellenwert einen Wechsel W des bspw. ersten Parametersatzes zum zweiten Parametersatz initiiert.

Die Speichereinrichtung ist insbesondere eingerichtet, die mit der Erfassungseinrichtung 50 vorgegebenen, und die Parametersätze definierenden, Parameterwerte zu speichern, und diese gespeicherten Parameterwerte vorzugsweise nach dem Verschwenken der Arbeitsaggregate 20 aus der Nichtbodenkontaktposition in die Bodenkontaktposition, zum Erzeugen von Stellsignalen während der Lageregelung der Arbeitsaggregate 20 während der Bodenkontaktposition aus der Speichereinrichtung aufzurufen.

Gemäß einem Ausführungsbeispiel wird die landwirtschaftliche Maschine 200 auf der landwirtschaftlichen Fläche 300 bewegt. Die Arbeitsaggregate 20 der Maschine 200 werden vorzugsweise im Randbereich R einer landwirtschaftlichen Fläche 300 z.B. Vorgewende von der Nichtbodenkontaktposition in die Bodenkontaktposition verschwenkt. Die Erfassungseinrichtung 50 definiert nach dem Verschwenken einen Parametersatz, welcher beispielsweise Parameterwerte, wie einen Schardruck oder eine Lage der Arbeitsaggregate 20 oder eine Arbeitstiefe T umfassen. Die Maschine 200 wird dann entlang der Fahrspuren FS bewegt, dabei wird bspw. zunächst ein erster, durch die Erfassungseinrichtung 50 vorgegebener Parametersatz, zum Verändern der Lage der Arbeitsaggregate 20 während der Bodenkontaktposition mittels der Stelleinrichtung 30 verwendet. Sobald bspw. ein in der Speichereinrichtung hinterlegter Schwellenwert erreicht wird, wird durch die Steuereinrichtung 40 ein Wechsel W zwischen den Parametersätzen veranlasst. Danach wird bspw. ein zweiter Parametersatz zum Verändern der Lage der Arbeitsaggregate 20 verwendet. Der zweite Parametersatz kann beispielsweise mehrere Parameterwerte umfassen, wie bspw. den Schardruck und/oder die Arbeitstiefe T definierende Signale der Erfassungseinrichtung.

Das Vorgeben der Parameterwerte durch die Erfassungseinrichtung 50 umfasst zumindest ein sensorisches Erfassen der Parameterwerte und/oder ein manuelles Definieren der Parameterwerte und/oder ein Aufrufen von in der Speichereinrichtung gespeicherten Parameterwerten. Es kann bspw. ein manuell durch einen Bediener mittel der Bedieneinrichtung vorgegebener Parameterwert und/oder ein durch die Erfassungseinrichtung 50 sensorisch bspw. mittels einem Ultraschallsensor erfasster Parameterwert umfasst sein.

Mittels der Erfassungseinrichtung 50 können außerdem verschiedene Arten der Parameterwerte erfasst werden, welche vorzugsweise abhängig sind von zumindest einer Lage der Arbeitsaggregate 20 und/oder einem Maschinenrahmen 70, insbesondere gegenüber einer Bodenoberfläche, einer Art eines Ausbringmaterials zur Aussaat, einer Maschinengeometrie der landwirtschaftlichen Maschine 200, eines Standorts der landwirtschaftlichen Maschine 200 auf der landwirtschaftlichen Fläche 300 und/oder eines Zeitintervalls während welchem die Arbeitsaggregate 20 in der Bodenkontaktposition sind.

Die durch zumindest einen erfassten Parameterwert definierten und/oder definierbaren Parametersätze, unterscheiden sich gemäß eines Ausführungsbeispiels in deren Anzahl, in deren Methode der Vorgabe und/oder in deren Art des Parameterwerts in und/oder um zumindest einen Parameterwert. Gemäß des Ausführungsbeispiels gemäß Fig. 2 kann ein Parametersatz bspw. ein manuell definiertes Zeitintervall und/oder Abstandsintervall nach einem Vorgewende und/oder eine durch einen Sensor erfasste Lage der Arbeitsaggregate 20 umfassen.

Figur 3a zeigt eine Seitenansicht der Arbeitsaggregate 20 während einer Nichtbodenkontaktposition d.h. gegenüber der Packerwalze 80 und/oder Maschinenrahmen 70 ausgehobene Arbeitsaggregate 20.

Die Veränderung Lage der Arbeitsaggregate 20 umfasst vorzugsweise eine Veränderung der Auslenkung der Arbeitsaggregate 20 gegenüber einem Maschinenrahmen 70 und/oder eine Veränderung der Winkellage der Arbeitsaggregate 20 gegenüber dem Maschinenrahmen 70 und/oder eine Veränderung der Höhenlage der Arbeitsaggregate 20 gegenüber dem Maschinenrahmen 70. Gemäß dem Ausführungsbeispiel umfasst die Winkellage der Arbeitsaggregate 20 gegenüber dem Maschinenrahmen 70 einen Winkel α.

Die Veränderung der Lage der Arbeitsaggregate 20 umfasst vorzugsweise eine Veränderung der Auslenkung eines Trägers 60 zur Lagerung der Arbeitsaggregate 20 gegenüber einem Maschinenrahmen 70 und/oder eine Veränderung der Winkellage eines Trägers 60 zur Lagerung der Arbeitsaggregate 20 gegenüber einem Maschinenrahmen 70 und/oder eine Veränderung der Höhenlage des Trägers 60 zur Lagerung der Arbeitsaggregate 20 gegenüber einem Maschinenrahmen 70.

Die landwirtschaftliche Maschine 200 kann erfindungsgemäß zwei oder mehr Träger 60 umfassen, welche erfindungsgemäß durch separat steuerbare Steuersysteme 10 gesteuert und/oder geregelt werden können.

Eine Veränderung der Lage wird mittels der Stelleinrichtung 30 vorzugsweise in Form von einen oder mehreren Aktoren umgesetzt. Im Ausführungsbeispiel ist der Aktor in Form eines hydraulischen Zylinders gebildet.

Die Erfassungseinrichtung 50 ist vorzugsweise mit der Stelleinrichtung 30 wirktechnisch gekoppelt und ist eingerichtet, einen Steuerdruck und/oder einen Hubweg Z zumindest eines Aktors zu erfassen, welcher Aktor Teil der Stelleinrichtung 30 ist.

Die Erfassungseinrichtung 50 gemäß eines weiteren Ausführungsbeispiels vorzugsweise mit dem Träger 60 und/oder dem Maschinenrahmen 70 wirktechnisch gekoppelt.

Der Träger 60 ist gegenüber dem Maschinenrahmen 70 mittels einer quer zur Fahrtrichtung FR orientierten Achse A drehbar am Maschinenrahmen 70 gelagert.

Gemäß dem Ausführungsbeispiel wird der Träger 60 gegenüber dem Maschinenrahmen 70 mittelbar mittels der Stelleinrichtung 30 bewegt. Zum Verändern der Lage der Arbeitsaggregate 20 wird der Träger 60 gegenüber dem Maschinenrahmen 70 mittels einer rotatorischen Bewegung mittels der Stelleinrichtung 30 bewegt. Es wäre alternativ auch denkbar, dass die Veränderung der Lage der Arbeitsaggregate 20 durch eine lineare Bewegung initiiert wird. Das Ausführungsbeispiel zeigt außerdem eine translatorische Bewegung durch die Packerwalzen 80.

Die Figur 3b zeigt eine Seitenansicht der Arbeitsaggregate 20 während einer Bodenkontaktposition. Die Arbeitsaggregate 20 wurden aus der Nichtbodenkontaktposition (Figur 3a) in die Bodenkontaktposition Verschwenkt.

Die Lage der im Ausführungsbeispiel gezeigten Arbeitsaggregate 20 wird mithilfe des Steuersystems 10 auf Basis eines oder mehrerer Parametersätze auf eine im Wesentlichen konstante Arbeitstiefe T gegenüber einer Bodenoberfläche verändert.

Durch das Steuersystem 10 wird die Lage der Arbeitsaggregate 20 basierend auf Parametersätzen definiert. Im Ausführungsbespiel wird dadurch die Arbeitstiefe T der Arbeitsaggregate 20 innerhalb einer Bodenoberfläche geregelt. Die Arbeitstiefe T kann während der Bodenkontaktposition im Wesentlichen konstant gehalten werden.

Wird ein Wechsel W der Parametersätze bspw. auf Basis eines Schwellenwerts durch die Steuereinrichtung 40 veranlasst, kann die Lage der Arbeitsaggregate 20 neu angepasst werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste:**

| | | | |
|---|---|---|---|
| 10 | Steuersystem | A | Achse |
| 20 | Arbeitsaggregate | FS | Fahrspuren |
| 30 | Stelleinrichtung | W | Wechsel |
| 40 | Steuereinrichtung | R | Randbereich |
| 50 | Erfassungseinrichtung | Z | Hubweg |
| 60 | Träger | α | Winkel |
| 70 | Maschinenrahmen | | |
| 80 | Packerwalze | | |
| 90 | Vorratsbehälter | | |
| 100 | Verteilerturm | | |
| 110 | Verteilsystem | | |
| 200 | Landwirtschaftliche Maschine | | |
| 300 | Landwirtschaftliche Fläche | | |

## Patentansprüche

1. Steuersystem (10) zum Verändern der Lage von an einer landwirtschaftlichen Maschine (200) angebrachten Arbeitsaggregaten (20) zur Aussaat und/oder zur Bodenbearbeitung, wobei das Verändern der Lage ein Verschwenken der Arbeitsaggregate (20) zwischen einer Nichtbodenkontaktposition und einer Bodenkontaktposition sowie eine Lageregelung während der Bodenkontaktposition umfasst, und wobei das Verändern der Lage der Arbeitsaggregate (20) durch ein mittelbares und/oder unmittelbares Steuern und/oder Regeln der Lage der Arbeitsaggregate (20) mittels einer Stelleinrichtung (30) erfolgt, wobei das Steuern und/oder Regeln der Stelleinrichtung (30) basierend auf von durch eine Steuereinrichtung (40) erzeugten Stellsignalen für die Stelleinrichtung (30) erfolgt, und wobei eine Erfassungseinrichtung (50) vorgesehen ist, die zur Vorgabe von Parameterwerten eingerichtet ist, **dadurch gekennzeichnet, dass** die Steuereinrichtung (40) eingerichtet ist, Stellsignale zum Verändern der Lage der Arbeitsaggregate (20) während der Bodenkontaktposition basierend auf Parametersätzen, welche Parametersätze jeweils durch zumindest einen Parameterwert definiert und/oder definierbar sind, zu erzeugen.

2. Steuersystem (10) nach Anspruch 1, **dadurch gekennzeichnet, dass** die Parametersätze zumindest einen ersten Parametersatz, welcher durch zumindest einen Parameterwert definiert und/oder definierbar ist und zumindest einen zweiten Parametersatz, welcher durch zumindest einen Parameterwert, vorzugsweise zumindest zwei oder mehr Parameterwerte, definiert und/oder definierbar ist, umfassen.

3. Steuersystem (10) nach einem der Ansprüche 1 oder 2, **dadurch gekennzeichnet, dass** die Steuereinrichtung (40) eingerichtet ist, die vorgegebenen Parameterwerte der Erfassungseinrichtung (50) miteinander zu kombinieren und/oder einen Mittelwert zu bilden und/oder zu einer gemeinsamen Ausgangsgröße zu verrechnen.

4. Steuersystem (10) nach einem der vorhergehenden Ansprüche, **dadurch gekennzeichnet, dass** in einer Speichereinrichtung Schwellenwerte für die Parameterwerte hinterlegt und/oder hinterlegbar sind und dass diese Schwellenwerte von der Steuereinrichtung (40) zur Erzeugung der Stellsignale für die Stelleinrichtung (30) berücksichtigt werden.

5. Steuersystem (10) nach Anspruch 4, **dadurch gekennzeichnet, dass** die Steuereinrichtung (40) zur Berücksichtigung der Schwellenwerte eingerichtet ist, bei Erreichen des in der Speichereinrichtung hinterlegten Schwellenwerts, einen Wechsel (W) zwischen den Parametersätzen zu veranlassen.

6. Steuersystem (10) nach einem der Ansprüche 4 oder 5, dass die Speichereinrichtung eingerichtet ist, die mit der Erfassungseinrichtung (50) vorgegebenen, und die Parametersätze definierenden, Parameterwerte zu speichern, und diese gespeicherten Parameterwerte, vorzugsweise nach dem Verschwenken der Arbeitsaggregate (20) aus der Nichtbodenkontaktposition in die Bodenkontaktposition, zum Erzeugen von Stellsignalen während der Lageregelung der Arbeitsaggregate (20) während der Bodenkontaktposition aus der Speichereinrichtung aufzurufen.

7. Steuersystem nach einem der vorhergehenden Ansprüche, **dadurch gekennzeichnet, dass** das Vorgeben der Parameterwerte durch die Erfassungseinrichtung (50) zumindest eine der folgenden Methoden der Vorgabe umfasst:
- Ein sensorisches Erfassen von Parameterwerten,
- Ein Manuelles Definieren von Parameterwerten, und/oder
- Ein Aufrufen von in der Speichereinrichtung gespeicherten Parameterwerte.

8. Steuersystem (10) nach einem der vorhergehenden Ansprüche, **dadurch gekennzeichnet, dass** mittels der Erfassungseinrichtung (50) verschiedene Arten der Parameterwerte vorgegeben werden können, welche vorzugsweise abhängig sind von zumindest einem von folgendem:
- Einer Lage der Arbeitsaggregate (20), insbesondere gegenüber einer Bodenfläche und/oder einem Maschinenrahmen (70),
- Einer Art eines Ausbringmaterials zur Aussaat,
- Einer Maschinengeometrie der landwirtschaftlichen Maschine (200),
- Eines Standorts der landwirtschaftlichen Maschine (200) auf einer landwirtschaftlichen Fläche (300) und/oder
- Eines Zeitintervalls während welchem die Arbeitsaggregate (20) in der Bodenkontaktposition sind.

9. Steuersystem (10) nach einem der vorhergehenden Ansprüche, **dadurch gekennzeichnet, dass** sich die, durch zumindest einen Parameterwert definierten und/oder definierbaren, Parametersätze in deren Anzahl und/oder in deren Methode der Vorgabe und/oder in deren Art des Parameterwerts in und/oder um zumindest einen Parameterwert unterscheiden.

10. Steuersystem (10) nach einem der vorhergehenden Ansprüche, **dadurch gekennzeichnet, dass** die Erfassungseinrichtung (50) mit der Stelleinrichtung (30) wirktechnisch gekoppelt ist und einen Steuerdruck und/oder einen Hubweg zumindest eines Aktors erfasst, welcher Aktor Teil der Stelleinrichtung (30) ist.

11. Steuersystem (10) nach einem der vorhergehenden Ansprüche, **dadurch gekennzeichnet, dass** die Veränderung der Lage der Arbeitsaggregate (20) vorzugsweise eine Veränderung der Auslenkung der Arbeitsaggregate (20) gegenüber einem Maschinenrahmen (70) und/oder eine Veränderung der Winkellage der Arbeitsaggregate (20) gegenüber dem Maschinenrahmen (70) und/oder eine Veränderung der Höhenlage der Arbeitsaggregate (20) gegenüber dem Maschinenrahmen (70) umfasst.

12. Steuersystem nach einem der vorhergehenden Ansprüche, **dadurch gekennzeichnet, dass** die Veränderung der Lage der Arbeitsaggregate (20) vorzugsweise eine Veränderung der Auslenkung eines Trägers (60) zur Lagerung der Arbeitsaggregate (20) gegenüber dem Maschinenrahmen (70) und/oder eine Veränderung der Winkellage des Trägers (60) zur Lagerung der Arbeitsaggregate (20) gegenüber dem Maschinenrahmen (70) und/oder eine Veränderung der Höhenlage des Trägers (60) zur Lagerung der Arbeitsaggregate (20) gegenüber dem Maschinenrahmen (70) umfasst.

13. Steuersystem (10) nach zumindest einem der Ansprüche 11 oder 12, **dadurch gekennzeichnet, dass** die Erfassungseinrichtung (50) vorzugsweise mit dem Träger (60) und/oder dem Maschinenrahmen (70) wirktechnisch gekoppelt ist.

14. Steuersystem (10) nach zumindest einem der Ansprüche 11 bis 13, **dadurch gekennzeichnet, dass** der Träger (60) gegenüber dem Maschinenrahmen (70) mittels einer quer zur Fahrtrichtung (FR) orientierten Achse (A) drehbar am Maschinenrahmen (70) gelagert ist.

15. Steuersystem (10) nach zumindest einem der Ansprüche 11 bis 14, **dadurch gekennzeichnet, dass** zum Verändern der Lage der Arbeitsaggregate (20), der Träger (60) gegenüber dem Maschinenrahmen (70) mittels einer translatorischen Bewegung und/oder einer linearen Bewegung und/oder einer rotatorischen Bewegung mittelbar oder unmittelbar mittels der Stelleinrichtung (30) bewegt werden kann.

16. Verfahren zum Verändern der Lage von an einer landwirtschaftlichen Maschine (200) angebrachten Arbeitsaggregaten (20) zur Aussaat und/oder Bodenbearbeitung, wobei das Verändern der Lage ein Verschwenken der Arbeitsaggregate (20) zwischen einer Nichtbodenkontaktposition und einer Bodenkontaktposition sowie eine Lageregelung während der Bodenkontaktposition umfasst, und wobei das Verändern der Lage der Arbeitsaggregate (20) durch ein mittelbares und/oder unmittelbares Steuern und/oder Regeln der Lage der Arbeitsaggregate (20) mittels einer Stelleinrichtung (30) erfolgt, wobei das Steuern und/oder Regeln der Stelleinrichtung (30) basierend auf von durch eine Steuereinrichtung (40) erzeugten Stellsignalen für die Stelleinrichtung (30) erfolgt, und wobei ein Vorgeben von Parameterwerten mittels einer Erfassungseinrichtung (50) vorgesehen ist, **gekennzeichnet durch** ein Erzeugen von Stellsignalen zum Verändern der Lage der Arbeitsaggregate (20) durch die Steuereinrichtung (40) während der Bodenkontaktposition basierend auf Parametersätzen, welche Parametersätze jeweils durch zumindest einen Parameterwert definiert und/oder definierbar sind.

17. Landwirtschaftliche Maschine (200), insbesondere Sämaschine und/oder Bodenbearbeitungsmaschine, **dadurch gekennzeichnet, dass** diese ein Steuersystem (10) nach einem der Ansprüche 1 bis 15 aufweist und/oder dass diese eingerichtet ist, ein Verfahren nach Anspruch 16 auszuführen.
